# EUROPÄISCHE PATENTSCHRIFT

(11) **EP 0 536 727 B1**
(45) Veröffentlichungstag und Bekanntmachung des Hinweises auf die Patenterteilung: **07.12.1994**
(21) Anmeldenummer: 92117131.0
(22) Anmeldetag: 07.10.1992
(51) Int. Cl.: G01J 5/60

(54) **Multispektralsensor**
Multispectral sensor
Senseur multispectral

(30) Priorität: 09.10.1991 DE 4133481
(43) Veröffentlichungstag der Anmeldung: 14.04.1993
(73) Patentinhaber: ULTRAKUST electronic GmbH, 94239 Gotteszell (DE)
(72) Erfinder: Norkus, Volkmar, Dr.-Ing., W-8038 Dresden (DE); Schiewe, Christian, Dr.-Ing., W-8027 Dresden (DE); Nagel, Frank, Dipl.-Ing., W-8020 Dresden (DE)
(74) Vertreter: Heim, Hans-Karl, Dipl.-Ing.

(56) Entgegenhaltungen:
- EP-A- 0 419 046
- DE-A- 3 634 800
- DE-C- 1 133 915
- US-A- 2 674 155

## Beschreibung

Die Erfindung betrifft einen Multispektralsensor, bei dem verschiedene Spektralbereiche einer zu messenden Strahlung erfaßt werden.

Mit derartigen Sensoren lassen sich genaue Temperaturmessungen durchführen, da durch die Messung in unterschiedlichen Spektralbereichen die Beeinflussung des Meßergebnisses durch stark unterschiedliche Emissionsgrade in unterschiedlichen spektralen Bereichen weitgehend kompensiert werden kann.

Um eine präzise Abbildung des spektralen Bereichs der zu messenden Strahlung zu erhalten, ist es notwendig, daß den Kanälen für unterschiedliche Spektralbereiche ein identischer Meßstrahl zugeführt wird.

Es sind unterschiedliche multispektrale Verfahren bekannt, die sich insbesondere durch die Methode der räumlichen und spektralen Zerlegung der Strahlung unterscheiden. Die Nutzung dispergierender optischer Bauelemente, z.B. Prismen, erfordert insbesondere für Analysen von breitbandigen Spektralbereichen einen sehr hohen Justage- und Platzaufwand. Ein derartiges Verfahren kann daher nicht für einen Sensor verwendet werden, der als handhabbares diskretes Bauelement mit geringen Abmessungen zu konzipieren ist.

Der Einsatz eines multispektralen Sensors wie er nach DD 28 11 04 vorgeschlagen wird, ist prinzipiell möglich, aber aufgrund der nutzbaren Anzahl pyroelektrischer Materialien mit den entsprechenden optischen Eigenschaften auf eine geringe Anzahl spektraler Kanäle (<4) und entsprechende Anwendungen begrenzt.

Die Nutzung diskreter Filter zur spektralen Zerlegung der Gesamtstrahlung ist bisher nur sinnvoll in Verbindung mit Einschwenkmechanismen, z.B. Filterrad, bei serieller Auslesung eines Einelementsensors oder andererseits als ebene Anordnung einzelner Filter nebeneinander oder kontinuierlich auf einem Substrat bekannt.

Der Nachteil der ersten Variante ist unter anderem der sich ändernde Meßfleck bei bewegten Objekten und die zeitliche Überlagerung der Ausgangssignale bei der seriellen Auslesung mit gleichzeitig reduzierter Empfindlichkeit. Die zweite Variante führt zu unterschiedlichen Meßflecken und ist folglich für präzise Messungen nicht nutzbar.

Die bisher bekannten multispektralen Meßeinrichtungen erfordern daher sowohl einen großen Material- und Platzbedarf als auch einen hohen Justageaufwand. Dies führt wiederum zu mechanischer Instabilität und einer geringen örtlichen Auflösung der Messung.

Der Erfindung liegt daher die **Aufgabe** zugrunde, einen Multispektralsensor der oben genannten Art zu schaffen, der in geringen Abmessungen herstellbar ist, der bei einer hohen Empfindlichkeit einen nahezu gleichen Meßfleck in den einzelnen spektralen Kanälen gewährleistet und der sich durch hohe Funktionssicherheit auszeichnet.

Diese Aufgabe wird erfindungsgemäß durch einen Multispektralsensor gemäß Anspruch 1 gelöst. Vorteilhafte Weiterbildungen der Erfindung sind Gegenstand der abhängigen Ansprüche.

Erfindungsgemäß wird der in das Gehäuse des Sensors einfallende Gesamtstrahl durch die optische Einrichtung in mehrere Teilstrahlen aufgeteilt. Diese Teilstrahlen werden durch die optische Einrichtung auf Filter umgelenkt, die die optische Einrichtung vorzugsweise zentro- oder rotationssymmetrisch umgeben. Die Filter sind für einen bestimmten spektralen Bereich des einfallenden Strahls transparent und wenigstens für einen Teil des restlichen spektralen Bereichs reflektierend ausgebildet. Die Transmissionsbereiche der Filter unterscheiden sich dabei voneinander. So läßt jedes Filter nur den spektralen Bereich des eigenen Transmissionsbereichs in Richtung auf das dahinter befindliche strahlungsempfindliche Element passieren und reflektiert den restlichen spektralen Bereich des Teilstrahls in Richtung auf die anderen Filter, die die optische Einrichtung umgeben. Hierdurch wird erreicht, daß jedem Filter der seinem Transmissionsbereich entsprechende Spektralbereich aller Teilstrahlen zugeführt wird, wodurch jedem Filter im wesentlichen ein identischer Meßstrahl zugeführt wird, und jedes strahlungsempfindliche Element also annähernd den gleichen Meßfleck sieht.

Vorzugsweise sind die Filter parallel zur optischen Achse des einfallenden Strahls um die optische Einrichtung herum in Art eines Käfigs angeordnet. Wenn die die Aperturöffnung aufweisende Wand des Käfigs an ihrer Innenseite verspiegelt ist, wird gewährleistet, daß Teilstrahlen solange in dem Käfig reflektiert werden, bis sie auf das Filter mit dem zugehörigen spektralen Transmissionsbereich auftreffen. Hierfür ist es notwendig, daß die Wände und die Filter außerhalb ihres Transmissionsbereichs einen hohen Reflexionsgrad aufweisen, damit ein Teilstrahl nicht nach mehreren Reflexionen innerhalb des Käfigs sukzessive absorbiert wird, ohne auf alle Filter mit den zugehörigen spektralen Transmissionsbereichen aufzutreffen.

Die optische Einrichtung kann in der Art einer Pyramide mit einer n-eckigen Grundfläche ausgebildet sein, wobei um diese Pyramide herum dann n Filter angeordnet sind, denen jeweils ein eigenes strahlungsempfindliches Element mit einem eigenen Meßkanal zugeordnet ist. Die Spitze der Pyramide kann in den Käfig hinein oder aus dem Käfig herausragen.

Außer einer Pyramide sind auch andere geometrische Formen, wie z.B. Kegel, Halbkugeln, konkave, d.h. invertierte pyramidenartige Elemente und ähnliche Gebilde einsetzbar. Die Oberflächen der optischen Einrichtung sind mit einer oder mehreren hochreflektierenden Schichten beschichtet. Sie können vorzugsweise spektral breitbandig mit einer Goldschicht hochreflektierend verspiegelt sein.

Wenn diese optische Einrichtung um die optische Achse des einfallenden Strahls drehbar angeordnet ist, lassen sich als strahlungsempfindliche Elemente auch pyroelektrische Elemente verwenden, die nur bei Wechsellicht arbeiten. Auf der Pyramide sind dann alternierend reflektierende und absorbierende Flächen angeordnet, so daß jedes Filter bei einer Drehung der Pyramide sukzessive von einem reflektierten Teilstrahl überstrichen wird und anschließend eine Zeitlang kein Licht zugeführt bekommt. Auf diese Weise kann die Anordnung eines mechanischen Lichtzerhackers vor der Aperturöffnung des Multispektralsensors entfallen. Die rotierende optische Einrichtung, insbesondere Pyramide, ermöglicht somit eine Chopperung des einfallenden Strahls.

Der erfindungsgemäße Multispektralsensor läßt sich in sehr kleinen Abmessungen herstellen, wodurch er im Bereich der Gasanalytik, insbesondere der Abgasanalyse, der Sicherungstechnik und der Materialerkennung eingesetzt werden kann. Ein bevorzugter Einsatzbereich ist jedoch die Temperatursensorik, insbesondere im Infrarotbereich.

Ein Multispektralsensor zeichnet sich in einer bevorzugten Ausführungsform dadurch aus, daß im Strahlengang hinter der Aperturöffnung ein breitbandig hochreflektierendes Mittel zur räumlichen Zerlegung des Gesamtstrahls in Teilstrahlen symmetrisch zur optischen Achse des Systems angeordnet ist und sich dieses optische Mittel bzw. diese optische Einrichtung in einem Filterkäfig befindet, dessen Filter annähernd parallel zur optischen Achse des Systems ausgerichtet sind, hinter denen sich strahlungsempfindliche Elemente im Strahlengang der reflektierten Teilstrahlen befinden. Die Filter weisen auf der Strahlungseinfallseite außerhalb ihres Transmissionsbereiches einen hohen Reflexionsgrad auf und sind derart angeordnet, daß mindestens das gegenüberliegende Filter für wenigstens einen Teil des reflektierten Spektrums eine hohe Transmission aufweist. Die Filter sind hierbei vorzugsweise als Infrarot-Bandpaßfilter ausgebildet und so aneinandergefügt, daß keine Strahlungsverluste durch Absorption am Käfig entstehen.

Die Erfindung wird nachfolgend beispielsweise anhand der schematischen Zeichnung beschrieben. In dieser zeigen:
- Fig. 1: eine perspektivische teilgeschnittene Ansicht einer bevorzugten Ausführungsform des Multispektralsensors;
- Fig. 2: eine Teilansicht entlang des Schnitts II-II aus Fig. 1 und
- Fig. 3: eine Ansicht gemäß Fig. 1 einer weiteren bevorzugten Ausführungsform.

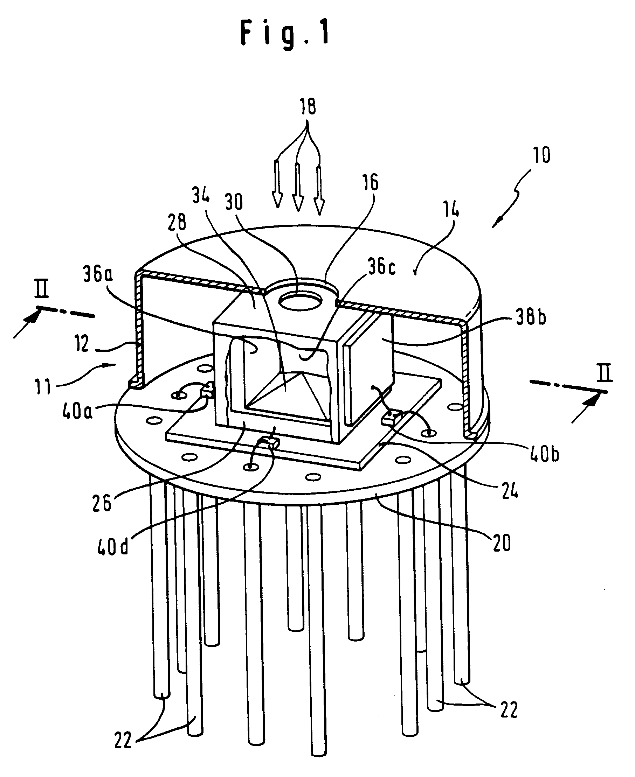

Fig. 1 zeigt einen Multispektralsensor 10, der in einem handelsüblichen TO 8-Gehäuse 11 angeordnet ist. Das Gehäuse 11 besteht aus einem Gehäusetopf 12, an dessen Stirnseite 14 eine zentrale Eintrittsöffnung 16 für den Eintritt einer zu messenden Strahlung 18 in das Innere des Gehäuses 11 angeordnet ist. Das Gehäuse 11 wird auf seiner der Stirnseite 14 gegenüberliegenden Seite von einem Gehäuseboden 20 abgeschlossen.

Von dem Gehäuseboden 20 stehen Anschlußstifte 22 senkrecht nach unten ab. Auf dem Gehäuseboden 20 ist ein Verdrahtungsträger 24 angeordnet, auf dem wiederum ein in etwa kubischer Käfig 26 montiert ist. Die der Eintrittsöffnung 16 des Gehäusetopfes 12 zugewandte Oberseite des Käfigs 26 ist als Aperturblende 28 ausgebildet, die eine zentrale Apertur 30 aufweist.

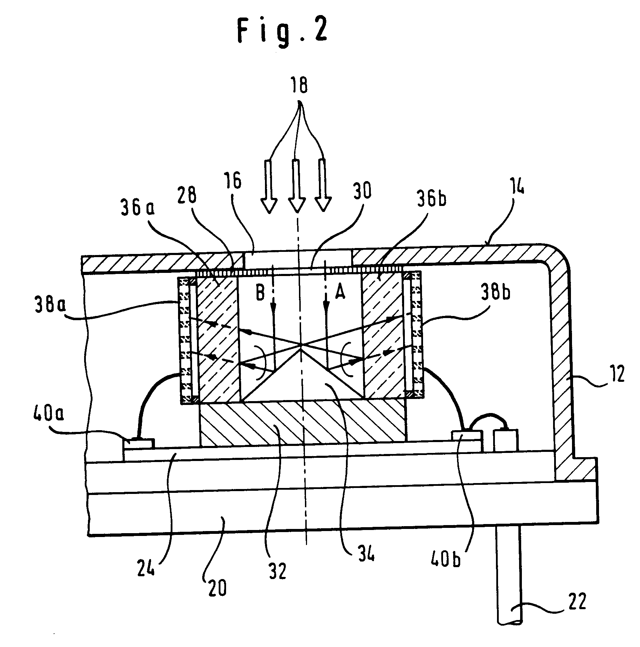

Auf dem Käfigboden (vgl. auch Fig. 2) ist eine Pyramide 34 mit quadratischer Grundfläche angeordnet. Die der Aperturöffnung 30 zugewandten Mantelflächen der Pyramide 34 weisen einen hohen Reflexionsgrad für die durch die Aperturöffnung 30 eintretende Gesamtstrahlung 18 auf. Die Gesamtstrahlung 18 wird nach dem Durchtritt durch die Aperturöffnung 30 gemäß den Pfeilen A,B an der Oberfläche der Pyramide 34 in Richtung auf die Seitenwände des Käfigs reflektiert, die durch Infrarot-Bandpaßfilter 36 gebildet sind. Diese Filter 36a/b haben jeweils voneinander abweichende Transmissionsbereiche außerhalb der sie stark reflektierend ausgebildet sind. Daher gelangt der im Transmissionsbereich des Filters 36b liegende spektrale Teil des Strahls A durch den Filter 36b hindurch auf ein strahlungsempfindliches Element 38b, das im Strahlengang hinter dem Filter 36b, d.h. an der Außenseite des Käfigs 26, angeordnet ist. Der nicht im Transmissionsbereich liegende Teil des Teilstrahls A wird von dem Filter 36b in Richtung auf das bezüglich der Pyramide 34 gegenüberliegende Filter 36a reflektiert und vice versa. Auf diese Weise werden die Teilstrahlen auf alle vier, die Pyramide 34 umgebenden Filter 36a bis 36d reflektiert, so daß jedem Filter 36a bis 36d der dem jeweils vorhandenen Transmissionsbereich entsprechende Spektralbereich aller Teilstrahlen A,B zugeführt wird.

Die dem Innenraum des Käfigs 26 zugewandte Innenseite der Aperturblende 28 ist ebenfalls hochreflektierend für den gesamten spektralen Bereich der einfallenden Strahlung ausgebildet, damit von den Filtern reflektierte Strahlung wieder auf die Oberfläche anderer Filter zurückreflektiert wird.

Die strahlungsempfindlichen Elemente 38 sind mit Signalverarbeitungsstufen 40 elektrisch verbunden, deren Ausgänge wiederum mit den Anschlußstiften 22 verbunden sind.

Das Gehäuse des Infrarot-Multispektralsensors 10 ist als handelsübliches TO 8-Gehäuse ausgebildet und läßt sich somit für Sonden mit geringen Abmessungen verwenden, z.B. für Abgasuntersuchungen.

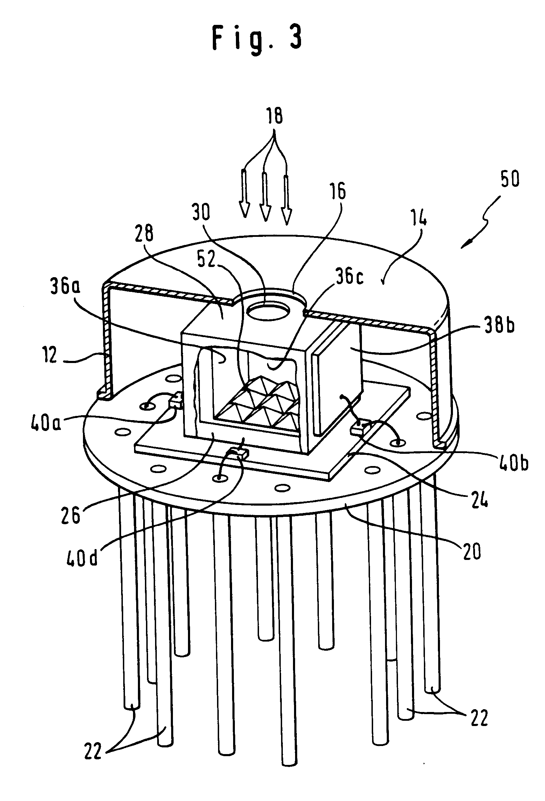

Fig. 3 zeigt eine zu Fig. 1 weitgehend identische weitere Ausführungsform 50 eines Multispektralsensors, der sich von dem Multispektralsensor 10 aus Fig. 1 lediglich dadurch unterscheidet, daß als optische Einrichtung keine Pyramide 34 mit quadratischer Grundfläche, sondern eine strukturierte Fläche 52, bestehend aus neun kleinen Pyramiden mit quadratischer Grundfläche verwendet wird. Es sind auch weitere geometrische Formen, z.B. zur Außenseite des Käfigs hin gestreckte Pyramiden oder sphärische geometrische Formen für die Aufteilung der Strahlen einsetzbar. Wichtig ist hierbei lediglich, daß eine gleichmäßige Aufteilung der Gesamtstrahlung 18 in gleichmäßig große Teilstrahlen erfolgt.

Wenn die strahlungsempfindlichen Elemente 38 als pyroelektrische Elemente ausgebildet sind, ist es möglich, die Pyramide 34 drehbar anzuordnen, und jeweils zwei gegenüberliegende Flächen auf der Oberseite der Pyramide mit einer absorbierenden Schicht zu versehen. Hierdurch wird den pyroelektrischen Elementen Wechsellicht zugeführt, ohne daß vor oder hinter der Eintrittsöffnung 16 des Gehäuses 11 ein Chopperelement zur mechanischen Zerhackung des Lichts z.B. in der Art eines Flügelrades vorgesehen werden muß.

## Patentansprüche

1. Multispektralsensor mit
- einem Gehäuse (11),
- einer in dem Gehäuse (11) angeordneten Eintrittsöffnung (16) für eine zu messende Strahlung (18),
- einer im Strahlengang hinter der Eintrittsöffnung (16) angeordneten optischen Einrichtung (34) zur Aufteilung des durch die Eintrittsöffnung (16) einfallenden Strahls (18) in Teilstrahlen (A, B),
- mehreren Filtern (36a bis 36d), die die optische Einrichtung (34) umgeben und unterschiedliche spektrale Transmissionsbereiche aufweisen, außerhalb derer sie reflektierend ausgebildet sind, und
- im Strahlengang der Teilstrahlen (A,B) hinter den Filtern angeordneten strahlungsempfindlichen Elementen (38a bis 38d).

2. Multispektralsensor nach Anspruch 1,
wobei
die Filter (36a bis 36d) annähernd parallel zur optischen Achse des einfallenden Strahls (18) ausgerichtet sind.

3. Multispektralsensor nach Anspruch 1 oder 2,
wobei
die optische Einrichtung (34,52) relativ zueinander geneigte Spiegelflächen aufweist, die für den zu messenden Spektralbereich des Strahls (18) hochreflektierend ausgebildet sind.

4. Multispektralsensor nach Anspruch 3,
wobei
die Spiegelflächen zentro- bzw. rotationssymmetrisch zur optischen Achse des Strahls (18) angeordnet sind.

5. Multispektralsensor nach Anspruch 3 oder 4,
wobei
die optische Einrichtung (34) die Form einer Pyramide mit einer vieleckigen Grundfläche aufweist.

6. Multispektralsensor nach Anspruch 5,
wobei
die Anzahl der Ecken der Grundfläche der Pyramide der Anzahl der Filter entspricht.

7. Multispektralsensor nach einem der vorhergehenden Ansprüche,
wobei
die optische Einrichtung (34,52) um die optische Achse des Strahls (18) drehbar ist.

8. Multispektralsensor nach einem der vorhergehenden Ansprüche,
wobei
die Filter (36a bis 36d) derart die optische Einrichtung (34) umgeben, daß jedes Filter für wenigstens einen Teil des reflektierten Spektralbereichs des bezüglich der optischen Einrichtung (34) gegenüberliegenden Filters (36b) eine hohe Transmission aufweist.

9. Multispektralsensor nach einem der vorhergehenden Ansprüche,
wobei
die optische Einrichtung (34) den Boden und die Filter (36a bis 36d) die Wände eines im Strahlengang hinter der Eintrittsöffnung (16) angeordneten Käfigs (26) bilden.

10. Multispektralsensor nach Anspruch 9,
wobei
die eine Apertur (30) aufweisende Oberseite (28) des Käfigs reflektierend ausgebildet ist.

11. Multispektralsensor nach einem der vorhergehenden Ansprüche,
wobei
die optische Einrichtung (52) mehrere mit hochreflektierenden Schichten beschichtete Pyramiden, Kegel, Halbkugeln oder sphärische Segmente aufweist.

12. Multispektralsensor nach einem der vorhergehenden Ansprüche,
wobei
die strahlungsempfindlichen Elemente (38a bis 38d) als pyroelektrische Elemente, Vakuumthermo-Elemente, Thermosäulen oder Photodioden ausgebildet sind.

13. Multispektralsensor nach einem der vorhergehenden Ansprüche,
wobei
die Filter (36a bis 36d) als Interferenzfilter ausgebildet sind.

## Claims

1. A multispectral sensor with
- a casing (11),
- an entrance port (16) for a radiation (18) to be measured and located in the casing (11),
- an optical device (34) located in the optical path behind the entrance port (16) for dividing up the beam (18) incident through the entrance port (16) into partial beams (A,B),
- several filters (36a to 36d), which surround the optical device (34) and have different spectral transmission ranges, outside which they have a reflecting construction and
- radiation-sensitive elements (38a to 38d) arranged in the optical path of the partial beams (A,B) behind the filters.

2. A multispectral sensor according to claim 1,
wherein the filters (36a to 36d) are oriented approximately parallel to the optical axis of the incident beam (18).

3. A multispectral sensor according to claim 1 or 2,
wherein the optical device (34,52) has reflecting surfaces inclined relative to one another, which are constructed in highly reflecting manner for the spectral range of the beam (18) to be measured.

4. A multispectral sensor according to claim 3,
wherein the reflecting surfaces are arranged in centrally respectively rotationally symmetrical manner to the optical axis of the beam (18).

5. A multispectral sensor according to claim 3 or 4,
wherein the optical device (34) is in the form of a pyramid with a polygonal base.

6. A multispectral sensor according to claim 5,
wherein the number of angles of the base of the pyramid correspond to the number of filters.

7. A multispectral sensor according to one of the preceding claims,
wherein the optical device (34,52) is rotable about the optical axis of the beam (18).

8. A multispectral sensor according to one of the preceding claims,
wherein the filters (36a to 36d) surround the optical device (34) in such a way that each filter has a high transmission for at least a part of the reflected spectral range of the facing filter (36b) with respect to the optical device (34).

9. A multispectral sensor according to one of the preceding claims,
wherein the optical device (34) form the bottom and the filters (36a to 36d) form the walls of a cage (26) arranged in the optical path behind the entrance port (16).

10. A multispectral sensor according to claim 9,
wherein the top of the cage wall (28) having an aperture (30) has a reflecting construction.

11. A multispectral sensor according to one of the preceding claims,
wherein the optical device (52) has several pyramides, cones, half spheres or spherical segments coated with high reflecting coatings.

12. A multispectral sensor according to one of the preceding claims,
wherein the radiation-sensitive elements (38a to 38d) are constructed as pyroelectric elements, vakuum thermocouples, thermo columns or photodiods.

13. A multispectral sensor according to one of the preceding claims,
wherein the filters (36a to 36d) are constructed as interference filters.

## Revendications

1. Détecteur multispectral comportant
- un boîtier (11)
- une ouverture d'entrée (16) aménagée dans le boîtier (11) pour le rayonnement (18) à mesurer,
- un dispositif optique (34) placé sur le trajet du rayon, derrière l'ouverture d'entrée (16), et destiné à diviser en des rayons partiels (A, B) le rayon qui entre par l'ouverture d'entrée (16),
- plusieurs filtres (36a à 36d) qui entourent le dispositif optique (34) et présentent des bandes spectrales de transmission différentes, en dehors desquelles les filtres sont réfléchissants et
- des éléments (38a à 38d) sensibles au rayonnement qui sont placés sur le trajet des rayons partiels (A, B), derrière les filtres.

2. Détecteur multispectral selon la revendication 1, dans lequel les filtres (36a à 36d) sont orientés sensiblement parallèlement à l'axe optique du rayon (18) incident.

3. Détecteur multispectral selon la revendication 1 ou 2, dans lequel le dispositif optique (34, 52) présente des surfaces réfléchissantes inclinées l'une par rapport à l'autre qui sont fortement réfléchissantes pour le domaine spectral du rayon (18) à mesurer.

4. Détecteur multispectral selon la revendication 3, dans lequel les surfaces réfléchissantes sont disposées avec symétrie ponctuelle ou symétrie de rotation par rapport à l'axe optique du rayon (18).

5. Détecteur multispectral selon la revendication 3 ou 4, dans lequel le dispositif optique (34) a la forme d'une pyramide à base polygonale.

6. Détecteur multispectral selon la revendication 5, dans lequel le nombre d'angles de la base de la pyramide correspond au nombre de filtres.

7. Détecteur multispectral selon l'une des revendications précédentes, dans lequel le dispositif optique (34, 52) peut tourner autour de l'axe optique du rayon (18).

8. Détecteur multispectral selon l'une des revendications précédentes, dans lequel les filtres (36a à 36d) entourent le dispositif optique (34) de manière telle que chaque filtre présente une transmission élevée pour une partie au moins du domaine spectral réfléchi du filtre (36b) situé en vis-à-vis par rapport au dispositif optique (34).

9. Détecteur multispectral selon l'une des revendications précédentes, dans lequel le dispositif optique (34) constitue le fond et les filtres (36a à 36d) constituent les parois d'une cage (26) disposée sur le trajet du rayon, derrière l'ouverture d'entrée (16).

10. Détecteur multispectral selon la revendication 9, dans lequel la face supérieure (28) pourvue d'une ouverture (30) de la cage est réfléchissante.

11. Détecteur multispectral selon l'une des revendications précédentes, dans lequel le dispositif optique (52) présente plusieurs pyramides, cônes, demi-sphères ou segments sphériques revêtus de couches fortement réfléchissantes.

12. Détecteur multispectral selon l'une des revendications précédentes, dans lequel les éléments (38a à 38d) sensibles au rayonnement sont agencés sous la forme d'éléments pyro-électriques, de vacuum thermocouples, de thermopiles ou de photodiodes.

13. Détecteur multispectral selon l'une des revendications précédentes, dans lequel les filtres (36a à 36d) sont agencés sous la forme de filtres d'interférence.
